# EUROPEAN PATENT SPECIFICATION

(11) **EP 0 970 370 B1**
(45) Date of publication and mention of the grant of the patent: **11.06.2003**
(21) Application number: 98903127.3
(22) Date of filing: 03.02.1998
(51) Int. Cl.: G01N 23/12, G01N 23/20

(54) **FLOW CELL**
DURCHFLUSSZELLE
CUVE A CIRCULATION

(30) Priority: 06.02.1997 GB 9702418
(43) Date of publication of application: 12.01.2000
(73) Proprietor: Council for the Central Laboratory of the Research Councils, Warrington, Cheshire WA4 4AD (GB)
(72) Inventor: JONES, Gareth, Royston, Didsbury Manchester M20 6JA (GB)
(74) Representative: Allman, Peter John
(86) International application number: GB9800338
(87) International publication number: WO98035224

(56) References cited:
- YASUHIRO INADA ET AL: "IN-LABORATORY STOPPED-FLOW EXTENDED X-RAY ABSORPTION FINE STRUCTUREAPPARATUS IN THE DISPERSIVE MODE FOR DETERMINATION O THE STRUCTURE OF SHORT-LIVED INTERMEDIATES" REVIEW OF SCIENTIFIC INSTRUMENTS, vol. 65, no. 1, 1 January 1994, pages 18-24, XP000428540
- C. BERTHET-COLOMIDAS ET AL.: "An apparatus for stopped-flow X-ray scattering." REVUE DE PHYSIQUE APPLIQUEE., vol. 19, no. 9, 1984, PARIS FR, pages 769-772, XP002064964 cited in the application
- T. NAGAMURA ET AL.: "Stopped-flow x-ray scattering device with a slit-type mixer." JOURNAL OF BIOCHEMICAL AND BIOPHYSICAL METHODS , vol. 11, 1985, AMSTERDAM, pages 277-286, XP002064965 cited in the application
- A. G. FOWLER: "Stopped-flow solution scattering using synchrotron radiation : apprartus, data collection and data analysis." JOURNAL OF BIOCHEMICAL AND BIOPHYSICAL METHODS , vol. 7, 1983, AMSTERDAM, pages 317-239, XP002064966 cited in the application

## Description

This invention relates to a flow cell for monitoring biological and chemical reactions, and particularly for monitoring reactions using X-ray scattering.

Flow cells are used to obtain time domain measurements of the dynamics of reactions between samples and reagents. Typically, a sample and a reagent are brought together and mixed to form a reaction mixture, then pumped within a few milliseconds of mixing into an observation chamber. The dynamics of reactions between the sample and reagent are measured by monitoring scattering by the reaction mixture of X-rays or other less energetic photons directed at a window in the observation chamber.

The time elapsed between mixing of reagents and pumping the reaction mixture to an observation chamber (known as 'dead time') imposes a limit on the operation of a flow cell. The dynamics of reactions whose time scale is the same or less than the dead time of a flow cell cannot be accurately monitored using that flow cell. There is a continuing desire therefore for a flow cell which performs adequate mixing of a sample and reagent and which transports reagents to an observation chamber with a minimal dead time.

Two methods of pumping a sample and reagent are used in existing flow cells. The first method is to propel the sample and reagent using syringes driven by compressed gas. However, the inertia of moving components of the syringes and the inertia of the reagents are additive, and pressures within cells during operation are consequently high (typically 350.000 Pa (3.5 bar)). As a result of the pressures exerted within a syringe driven cell, windows in an observation chamber are required to be thick (usually made of quartz), leading to the attenuation of X-rays passing through them. This attenuation reduces the strength of X-rays scattered from the windows, reducing the sensitivity of measurements and thereby increasing a number of repeated measurements needed to obtain a satisfactory analysis. Consequently, the syringe method of reagent propulsion is not preferred for flow cells which are used in conjunction with X-ray scattering.

An alternative method of bringing together a sample and a reagent is to hold each under pressure (usually approximately 100.000 Pa (1 bar)) in separate reservoirs connected to a mixing point via electromagnetic valves. The electromagnetic valves are triggered for a set length of time, allowing the sample and reagent to flow through a mixing point and into an observation chamber. In contrast to the situation with syringe valves, the inertia of reagents and valves is mostly decoupled. The pressures developed in a simple electromagnetic valve based flow cell may thus be kept much lower than in a syringe based device, permitting the use of thinner observation chamber windows, e.g. 20 µm of mica, which give rise to less attenuation of scattered X-rays. A further advantage of reducing the pressure within the flow cell is that it reduces the strain on windows of the observation chamber. This is particularly important for measurements which are sensitive to X-ray polarisation, as strain caused by high pressures will cause birefringence of the windows, and thereby affect measurements.

A most important aspect of flow cells is the efficiency with which reagents are mixed, and the speed with which a resulting reaction mixture is subsequently converted from turbulent to laminar flow. A reaction mixture whose flow is substantially laminar on arrival at an observation chamber will fill that chamber evenly; a situation which is highly desirable.

Several types of mixers are currently used in different flow cells. In a first mixer, known as a 'T'-mixer, a sample and reagent flow along inlets from opposite directions, meet head on, and are forced to change direction into an outlet. T-mixers are effective, provided that the flow rate of fluids at the mixer is sufficient to produce sufficiently turbulent flow. The effectiveness of this type of mixing might suggest that a good flow cell could be constructed simply by mounting an observation chamber directly above such a mixer. However, this is not possible since uneven filling of the observation window always results, with a flow front of a reaction mixture of a sample and reagent advancing with a convex profile. One way around this difficulty is to introduce a conventional 4-jet mixer between the 'T' and the observation chamber. A commercially available 4-jet mixer is called the Durrum-Gibson mixer, and consists of a single inlet which divides into four lesser inlets before recombining into a single outlet. The 4-jet mixer has the inherent disadvantage that it introduces an increased volume upstream of the observation chamber, and consequently increases the dead time of a flow cell to which it is added. Flow cells incorporating both a T-mixer and a 4-jet mixer have been developed by Fowler *et al*, 1983. *J. Biochem. Biophys. Meth*. **7**:317; and by Berthet-Colominas *et al*, 1984. *Revue Phys. Appl*. **19**:769. The Berthet-Colominas flow cell also includes a parallel array of five conduits which carry the sample and reagent from the 4-jet mixer to an observation chamber. This arrangement suffers from 'streaming' of reaction mixtures across the observation chamber, wherein a reaction mixture does not properly fill the chamber, but instead proceeds directly from an inlet to an outlet, crossing only a central region of the observation chamber.

A different approach to eliminating the convex injection front was taken by Nagamura *et al*, 1985. *J. Biochem. Biophys. Meth*. **11**:277, using a 'slit' mixer. Here, a sample and a reagent flow along inlets with rectangular cross-sections, and meet at a line rather than a point. Flow of a reaction mixture from the slit mixer is substantially laminar as the mixture enters an observation chamber, and filling of the observation chamber is consequently more even than is the case with a T-mixer. In practice however, the slit mixer suffers from a failure to provide the required turbulent flow for good mixing. This problem was overcome by Nagamura *et al* by approximating a slit mixer using an array of 14 T-mixers. While this arrangement appears to work well from published data, the complex array of very fine inlets and outlets which make up the mixer will limit the ultimate flow rate, and hence dead time which can be achieved. The inlets and outlets will also be prone to blockage, reducing the mixer's reliability.

It is an object of the invention to provide a flow which overcomes or substantially mitigates the above disadvantages.

According to the invention there is provided a flow cell comprising a mixer having first and second inlets for receiving fluids to be mixed and a common mixed fluids outlet, a body defining a chamber having an inlet connected to the mixer outlet and an outlet, and means for delivering fluids to the mixer inlets at predetermined flow rates, a window being formed in at least one wall of the chamber through which mixed fluids within the chamber may be observed, wherein the mixer inlets and outlet are interconnected at a common junction and are dimensioned such that at the predetermined flow rates fluid flow is turbulent immediately upstream and downstream of the junction characterised in that the chamber inlet is defined by a channel interconnecting a plurality of conduits (8) which communicate in parallel with spaced-apart portions of the chamber (4) and are dimensioned such that at the predetermined flow rates fluid flow is laminar immediately upstream of the chamber (4), and the chamber inlet channel is connected to the mixer outlet (7) immediately downstream of the junction.

Preferably, the plurality of conduits defining the chamber inlet comprises five conduits arranged in a fan via which the mixed fluids flowing from the outlet of the mixer are distributed at points spread across the chamber.

Preferably, the outlet from the chamber has similar dimensions to the chamber inlet, the conduits of the outlet leading to a collection point from which the mixed fluids flow through an output conduit, the output conduit being dimensioned such that, at the predetermined flow rate, flow within the output conduit will be turbulent, and a transition of the mixed fluids from laminar to turbulent flow at the output conduit will lead to a back pressure which will act back through the outlet and into the chamber.

Suitably, the fluids to be mixed are held in reservoirs and flow to the mixer upon actuation of valves positioned in the inlets to the mixer, the flow being a result of pressure within the reservoirs.

Suitably, the valves are actuated as a result of signals from an electronic controller, the duration of opening of each valve being independently controllable, allowing the variation of mixing ratios. The opening of one valve may be delayed with respect to the other to provide synchronised stopped flow.

Preferably, the pressure within the reservoirs containing the fluids to be mixed is less than 300.000 Pa (3 bar).

Most preferably, the pressure within the reservoirs containing the fluids to be mixed is 100.000 Pa (1 bar).

The invention is advantageous in that fluids flow turbulently before arrival at the mixer, thereby promoting good mixing of the fluids by the mixer. The arrangement of the conduits leading to the observation chamber and the fact that the flow of the mixed fluids in the conduits is laminar ensure that they arrive with an even profile across the window in the chamber. The distribution of the mixed fluids provides for even filling of the chamber, and avoids the problem of a reaction mixture 'streaming' across a central region of the chamber.

A specific embodiment of the invention will now be described with reference to the accompanying drawings, in which:
Figure 1 is a schematic view of a flow cell according to the invention and associated reservoirs;
Figure 2 is a schematic illustration of trigger pulses used to operate valves of the flow cell of Figure 1; and
Figure 3 is a view of the mixer and observation chamber of Figure 1 to a larger scale.

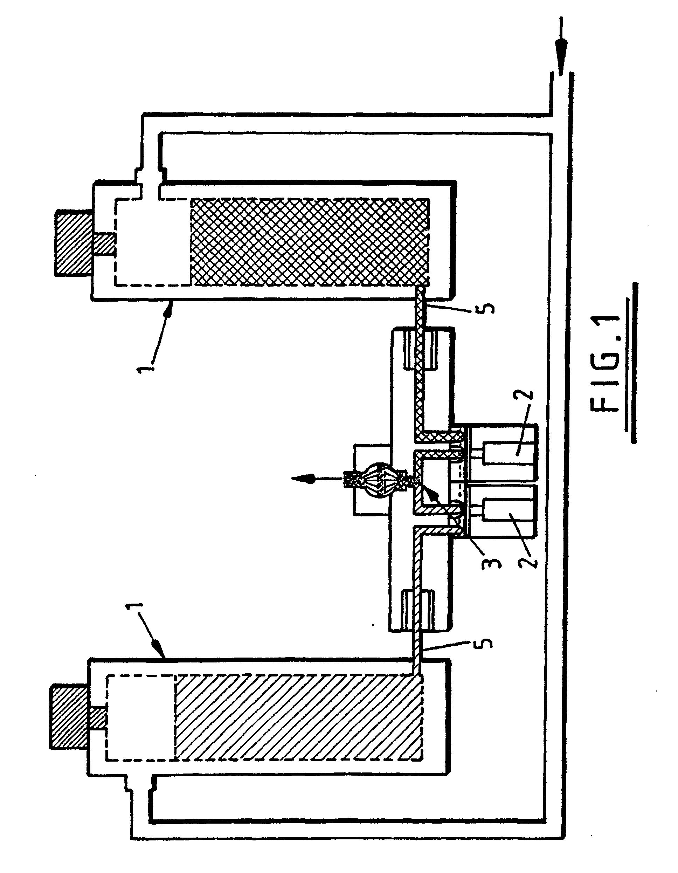

Referring to Figure 1, a flow cell comprises reservoirs 1 containing a sample and a reagent respectively which flow via valves 2 to a mixer 3. The resultant reaction mixture is transferred from the mixer 3 to an observation chamber 4, where scattering of X-rays from a source (not shown) by the reaction mixture is monitored.

The reagent and sample are held in their respective reservoirs 1 at an excess pressure of approximately 100.000 Pa (1 bar). Conduits 5 from the base of each reservoir 1 carry the reagent and sample to solenoid valves 2, which are ordinarily in a closed configuration. An electronic valve controller (not shown) opens and closes each of the valves 2 to provide a required ratio of sample to reagent at the mixer 3. The operation of the valve controller takes account of different viscosities of samples and reagents, and of desired ratios of sample to reagent, timing the opening and closing of the valves 2 so that selected volumes of sample and regent are delivered to the mixer.

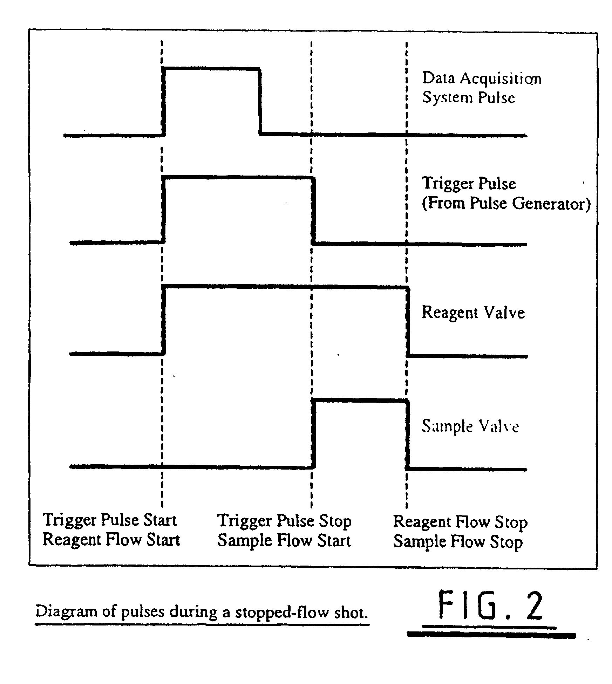

The valve controller generates a trigger pulse in response to the leading edge of a pulse received from a data acquisition system (not shown). The reagent valve opens in response to the leading edge of the trigger pulse, the sample valve opens in response to the trailing edge of the trigger pulse, and both valves close a predetermined period after the trailing edge of the trigger pulse. The opening of one valve 2 can thus be delayed with respect to the other by varying the length of the trigger pulse, both valves shutting simultaneously. Figure 2 shows an example of the pulses used to operate the valves 2 during a single stopped-flow shot. By varying the length of the trigger pulse, it is possible to control the opening and the closing of each valve 2 so as to achieve a desired ratio of reagent to sample in the mixture delivered to the chamber 4.

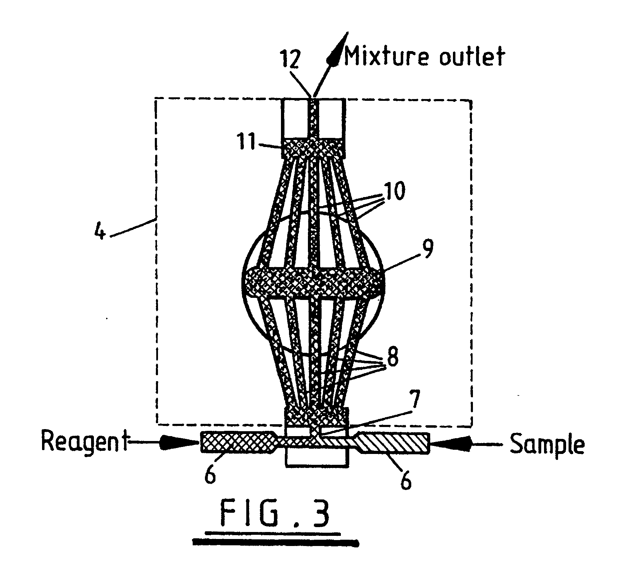

The mixer 3 and the observation window 4 are shown in greater detail in Figure 3. When the solenoid valves 2 are in an open configuration, the sample and reagent flow, under the 100.000 Pa (1 bar) pressure from the reservoirs 1, through inlets 6 to the mixer 3. The mixer 3 is a 'T'-mixer, wherein the sample and reagent are carried along inlets 6 from opposite directions, meet head on, and are diverted through 90 degrees into an outlet 7.

A section of each inlet 6 immediately adjacent the mixer 3 has a reduced diameter. This reduced diameter causes the reagent and the sample to flow more quickly, ensuring that their flow becomes turbulent before arriving at the T-mixer 3 (a Reynolds number of typically 3000 or more). The sample and reagent approach each other head on and are then diverted through 90 degrees along the outlet 7. The diameter of the outlet 7 is sufficiently narrow to ensure that flow along it is also turbulent. The fact that flow is turbulent immediately upstream and immediately downstream from the mixer 3 is most important, since this ensures that the sample and reagent are thoroughly mixed to form a reaction mixture.

Immediately above the mixer 3, the outlet 7 opens into a distribution channel which feeds a 'fan' of five conduits 8 leading to the observation chamber 4. The diameter of the conduits 8 is such that the speed of flow of the reaction mixture through each of the conduits 8 is sufficiently low for the flow to be laminar, and therefore the reaction mixture arrives at the observation chamber 4 with a laminar flow. The reaction mixture is evenly distributed throughout the observation chamber 4 by the fan of conduits 8, in contrast to other flow cells wherein the mixture has a tendency to 'stream' across a central portion of an observation chamber. Upon arrival at the observation chamber 4, the dynamics of reactions in the reaction mixture are monitored by detecting scattering by the mixture of a beam of X-rays directed through a mica window 9 in a wall of the chamber 4.

The reaction mixture is removed from the observation chamber 4 via a second fan of five conduits 10 identical to the fan of conduits 8 which distributed the mixture at the chamber 4. The five conduits 10 converge at a collection point 11 from which the mixture flows into an outlet 12 of narrow diameter. The narrow diameter of the outlet 12 causes the flow of the reaction mixture to be converted from laminar to turbulent flow. This conversion produces a back-pressure along the fan of conduits 10 to the observation chamber 4, which acts to prevent cavitation of the reaction mixture (i.e. the formation of bubbles) within the observation chamber 4.

The time between mixing the sample and reagent, and arrival of the resulting reaction mixture at the observation chamber 4 (dead time) has been measured for this embodiment of the invention to be 0.8 milliseconds. This short dead time was in part achieved by positioning the fan of conduits 8 which carry the mixture to the observation chamber 4 approximately 1 mm downstream from the mixer 3.

The rate at which the observation chamber 4 is filled is dependent on the pressure with which the reaction mixture is propelled. In the present embodiment, an increase in fill rate was achieved when the pressure was increased from 75.000 to 100.000 Pa (0.75 to 1 bar). Further increases in pressure had a negligible effect on the fill rate.

The illustrated embodiment of the invention has been found to be suitable for mixing samples and reagents in any ratio ranging from 1:1 to 1:9.

Alternative valve control systems to that described above are of course possible. Essentially, the valves can be operated independently of each other, or by arranging them to fire open simultaneously, or close simultaneously. The length of time each valve is open is, of course, also controlled. This variation is achieved by triggering the valves on either the rising edge of a square pulse of triggering one valve on the rising edge and the other valve on the falling edge. The length of the square pulse and the valve opening time are varied to the desired effect. The reason this flexibility is required is to enable control of the mixing ratios (1:1 to 20:1 for example) over a wide range of sample and reagent viscosities. The amount of mixture flowing through the cell is greater than the volume of the cell as the initial flow acts mainly to remove the previous contents of the cell and might not in fact be the required ratio of reactants. When the flow stops the measurement is initiated. The mixing ratio may be set before the experiment off-line by a process of trial and error. This can be achieved by mixing a dye with either sample or reagent and measuring the final concentration of the dye in the observation cell by its absorbance with light of the appropriate wavelength for the dye.

Whilst the above description is directed towards a stopped-flow cell to be used in conjunction with X-rays, the flow cell is also suitable for use with ultra-violet light, for example to investigate circular dichroism. For use in conjunction with ultra-violet light, the windows of the observation chamber must be replaced with 'spectrosil' windows. There may also be applications for the invention in continuous flow conditions, although care would be required to ensure consistent mixing of components. In stopped-flow applications, most of the fluid passed by the valves is completely mixed by the turbulent flow within the device, and the mixing ratio is accurately known from the volumes of the fluid passed by the valves.

## Claims

1. A flow cell comprising a mixer (3) having first and second inlets (6) for receiving fluids to be mixed and a common mixed fluids outlet (7), a body defining a chamber (4) having an inlet connected to the mixer outlet (7) and an outlet (12), and means (2) for delivering fluids to the mixer inlets (6) at predetermined flow rates, a window (9) being formed in at least one wall of the chamber (4) through which mixed fluids within the chamber (4) may be observed, wherein the mixer inlets (6) and outlet (7) are interconnected at a common junction and are dimensioned such that at the predetermined flow rates fluid flow is turbulent immediately upstream and downstream of the junction, **characterised in that** the chamber inlet is defined by a channel interconnecting a plurality of conduits (8) which communicate in parallel with spaced-apart portions of the chamber (4) and are dimensioned such that at the predetermined flow rates fluid flow is laminar immediately upstream of the chamber (4), and the chamber inlet channel is connected to the mixer outlet (7) immediately downstream of the junction.

2. A flow cell according to claim 1, wherein the plurality of conduits (8) defining the chamber inlet comprises conduits which diverge from the chamber inlet channel to points distributed across the chamber.

3. A flow cell according to claim 1 or 2, wherein the outlet (10,11,12) from the chamber has the same configuration as the chamber inlet.

4. A flow cell according to claim 1, 2 or claim 3, wherein the outlet (10.11.12) from the chamber is dimensioned such that, at the predetermined flow rates, flow within the output conduit (12) will be turbulent.

5. A flow cell according to any preceding claim, wherein the sample and reagent are held in reservoirs (1) and flow to the mixer upon actuation of valves (2) positioned in the inlets (6) to the mixer.

6. A flow cell according to claim 5, wherein the valves (2) are actuated as a result of signals from an electronic controller, the valve (2) opening times being independently controllable to control mixing ratios and the delay between the opening of one valve (2) and the other.

7. A flow cell according to claim 5 or 6, wherein the reservoirs (1) are pressurised.

8. A flow cell according to claim 7, wherein the excess pressure within the reservoirs (1) containing the sample is 100.000 Pa (1 bar).

## Patentansprüche

1. Durchflusszelle, die als Elemente aufweist: einen Mischer (3) mit einer ersten und mit einer zweiten Einlassöffnung (6) für die Aufnahme von Fluiden, die gemischt werden sollen, sowie mit einem Ausfluss (7) für die gemeinsam gemischten Fluide, einen Körper, der eine Kammer (4) definiert mit einer Einlassöffnung, die mit dem Mischerausfluss (7) verbunden ist, sowie mit einem Ausfluss (12), und eine Vorrichtung (2) für das Zuführen von Fluiden zu den Einlassöffnungen (6) des Mischers mit vorherbestimmten Fließgeschwindigkeiten, ein Fenster (9), das in mindestens einer Wand der Kammer (4) ausgebildet ist und durch das die gemischten Fluide in der Kammer (4) beobachtet werden können, wobei die Einlassöffnungen (6) und Ausflüsse (7) des Mischers an einer gemeinsamen Verbindung miteinander verbunden sind und so dimensioniert sind, dass bei den vorherbestimmten Fließgeschwindigkeiten der Fluss des Fluids unmittelbar stromaufwärts und stromabwärts von der Verbindung turbulent ist, **dadurch gekennzeichnet, dass** die Einlassöffnung zur Kammer durch einen Kanal definiert ist, welcher eine große Anzahl von Leitungen (8) miteinander verbindet, welche parallelen nebeneinander mit räumlich voneinander entfernt angeordneten Teilen der Kammer (4) in Kommunikation stehen und welche so dimensioniert sind, dass bei den vorherbestimmten Fließgeschwindigkeiten der Fluss des Fluids unmittelbar stromaufwärts von der Kammer (4) laminar ist, und der Einlasskanal zur Kammer unmittelbar stromabwärts von der Verbindung mit dem Mischerausfluss (7) verbunden ist.

2. Durchflusszelle gemäß Anspruch 1, bei welcher die große Anzahl von Leitungen (8), welche die Einlassöffnung zur Kammer definieren, Leitungen aufweist, welche von dem Einlasskanal in die Kammer aus zu Punkten hin divergieren die quer über die Kammer verteilt sind.

3. Durchflusszelle gemäß Anspruch 1 oder 2, bei welcher die Auslassöffnung (10, 11, 12) aus der Kammer die gleiche Konfiguration aufweist wie die Einlassöffnung zur Kammer.

4. Durchflusszelle gemäß Anspruch 1, 2 oder 3, bei welcher die Auslassöffnung (10, 11, 12) aus der Kammer so dimensioniert ist, dass bei den vorherbestimmten Fließgeschwindigkeiten der Fluss innerhalb der Ausflussleitung (12) turbulent sein wird.

5. Durchflusszelle gemäß irgendeinem vorhergehenden Anspruch, bei welcher die Probe und das Reagens in Behältern (1) gehalten werden und zu dem Mischer fließen nachdem die Ventile (2) betätigt worden sind, welche in den Einlassöffnungen (6) zu dem Mischer angeordnet sind.

6. Durchflusszelle gemäß Anspruch 5, bei welcher die Ventile (2) betätigt werden als Ergebnis der Signale von einem elektronischen Steuergerät, wobei die Öffnungszeiten des Ventils (2) unabhängig gesteuert werden können, um die Mischverhältnisse und die Verzögerung zwischen der Öffnung des einen und des anderen Ventils (2) zu steuern.

7. Durchflusszelle gemäß Anspruch 5 oder 6, bei welcher die Behälter (1) unter Druck stehen.

8. Durchflusszelle gemäß Anspruch 7, bei welcher der Überdruck innerhalb der Behälter (1), welche die Probe beinhalten, 100.000 Pa (1bar) beträgt.

## Revendications

1. Cuve à circulation comprenant un mélangeur (3) comportant des première et deuxième entrées (6) destinées à recevoir des fluides devant être mélangés et une sortie commune des fluides mélangés (7), un corps définissant une chambre (4) comportant une entrée connectée à la sortie du mélangeur (7) et une sortie (12), et un moyen (2) pour amener les fluides vers les entrées du mélangeur (6) à des débits prédéterminés, une fenêtre (9) étant formée dans au moins une paroi de la chambre (4), à travers laquelle les fluides mélangés dans la chambre (4) peuvent être observés, les entrées du mélangeur (6) et la sortie (7) étant interconnectées au niveau d'une jonction commune et étant dimensionnées de sorte qu'en présence des débits prédéterminés, l'écoulement du fluide est turbulent immédiatement en amont et en aval de la jonction, **caractérisée en ce que** l'entrée de la chambre est définie par un canal interconnectant plusieurs conduits (8) communiquant de manière parallèle avec des parties espacées de la chambre (4) et dimensionnés de sorte qu'en présence des débits prédéterminés, l'écoulement du fluide est laminaire immédiatement en amont de la chambre (4), le canal d'entrée de la chambre étant connecté à la sortie du mélangeur (7) immédiatement en aval de la jonction.

2. Cuve à circulation selon la revendication 1, dans laquelle les plusieurs conduits (8) définissant l'entrée de la chambre sont constitués par des conduits divergeant du canal d'entrée de la chambre vers des points répartis à travers la chambre.

3. Cuve à circulation selon les revendications 1 ou 2, dans laquelle la sortie (10, 11, 12) de la chambre a la même configuration que l'entrée de la chambre.

4. Cuve à circulation selon les revendications 1, 2 ou 3, dans laquelle la sortie (10, 11, 12) de la chambre est dimensionnée de sorte qu'en présence des débits prédéterminés, l'écoulement dans le conduit de sortie (12) est turbulent.

5. Cuve à circulation selon l'une quelconque des revendications précédentes, dans laquelle l'échantillon et le réactif sont retenus dans des réservoirs (1) et s'écoulent vers le mélangeur lors de l'actionnement de soupapes (2) positionnées dans les entrées (6) du mélangeur.

6. Cuve à circulation selon la revendication 5, dans laquelle les soupapes (2) sont actionnées en réponse à des signaux transmis par un dispositif de commande électronique, les nombres d'ouverture de la soupape (2) pouvant être commandés indépendamment en vue d'assurer la commande des rapports de mélange et du délai entre l'ouverture d'une soupape (2) et de l'autre.

7. Cuve à circulation selon les revendications 5 à 6, dans laquelle les réservoirs (1) sont mis sous pression.

8. Cuve à circulation selon la revendication 7, dans laquelle la pression excédentaire dans les réservoirs (1) contenant l'échantillon correspond à 100,000 Pa (1 bar).
